Europäisches Patentamt

European Patent Office

Office européen des brevets

(19)

(11) Veröffentlichungsnummer: **0 052 764**
B1

(12) **EUROPÄISCHE PATENTSCHRIFT**

(45) Veröffentlichungstag der Patentschrift :
03.04.85

(21) Anmeldenummer : 81108631.3

(22) Anmeldetag : 21.10.81

(51) Int. Cl.⁴ : **C 09 D   3/80**, C 09 D   3/81,
B 41 M   3/12, B 44 C   1/16,
C 09 D 11/10

(54) Verfahren zur Herstellung von Abziehbildern sowie Druckmedien und Lacke hierfür.

(30) Priorität : 20.11.80 DE 3043742

(43) Veröffentlichungstag der Anmeldung :
02.06.82 Patentblatt 82/22

(45) Bekanntmachung des Hinweises auf die Patenterteilung : 03.04.85 Patentblatt 85/14

(84) Benannte Vertragsstaaten :
AT BE CH DE FR GB IT LI NL SE

(56) Entgegenhaltungen :
DE-A- 2 224 277
Die Akte enthält technische Angaben, die nach dem
Eingang der Anmeldung eingereicht wurden und die
nicht in dieser Patentschrift enthalten sind.

(73) Patentinhaber : AGROB ANLAGENBAU GMBH
Münchener Str. 101
D-8045 Ismaning (DE)

(72) Erfinder : Rumbach, Karl Fr., Dipl.-Ing.
Liesingstrasse 6
D-6450 Hanau 9 (DE)

(74) Vertreter : Tetzner, Volkmar, Dr.-Ing. Dr. Jur.
Van-Gogh-Strasse 3
D-8000 München 71 (DE)

**Beschreibung**

Die Erfindung betrifft ein Verfahren zur Herstellung von Abziehbildern entsprechend dem Oberbegriff des Anspruches 1. Die Erfindung bezieht sich ferner auf Druckmedien und Lacke für die Herstellung von Abziehbildern nach diesem Verfahren.

Bisher werden keramische Abziehbilder unter Verwendung lösungsmittelhaltiger Druckmedien und lösungsmittelhaltiger Lacke hergestellt. Diese bekannten Verfahren sind mit einer Reihe wesentlicher Nachteile behaftet.

Die auf ein spezielles Trägerpapier in verschiedener Technik aufgedruckten Farblagen müssen nach jeder Farbe getrocknet werden. Der mit Warmluft durchgeführte Trocknungsprozeß erfordert einen hohen anlagentechnischen Aufwand. Die Trocknung der einzelnen Farbschichten und der Lackschicht benötigt im allgemeinen eine Zeitdauer zwischen 30 und 120 Minuten und darüber. Bis zum Ende des Druckens einer bestimmten Farblage ist weiterhin eine aufwendige Zwischenlagerung der Abziehbilderbogen notwendig. Nach jedem Trocknen einer Farblage muß ferner der Papierbogen wieder eingepaßt werden.

Sehr nachteilig bei dem bisher bekannten Verfahren ist ferner, daß beim Trocknungsprozeß ca. 25 bis 50 % der verwendeten Druckmedien und Lacke als Lösungsmitteldämpfe entweichen. Diese Lösungsmitteldämpfe stellen einerseits Substanzverluste dar und müssen andererseits aus Gründen des Umweltschutzes in recht aufwendiger Weise aus der Abluft entfernt werden. Nachteilig ist schließlich auch der beträchtliche Energiebedarf des Trocknungsprozesses.

Es ist ferner ein Verfahren zum Herstellen einer Filmfolie (Lackmaske) auf Dekorbildern bekannt (DE-A-2 224 277), bei dem im Siebdruckverfahren oder mit Hilfe eines anderen Applikationsverfahrens Monobutylmetacrylat, Monoisobutylmethacrylat, Monomethylmetacrylat oder andere monomere Acrylate auf Dekorbilder aufgebracht und mittels UV-Bestrahlung auspolymerisiert werden.

Der Erfindung liegt die Aufgabe zugrunde, ein Verfahren der im Oberbegriff des Anspruches 1 vorausgesetzten Art so auszubilden, daß eine besonders wirtschaftliche, kostensparende Herstellung von Abziehbildern möglich ist und insbesondere der Zeitaufwand sowie der Investitions- und Energiebedarf wesentlich verringert werden.

Diese Aufgabe wird erfindungsgemäß durch die kennzeichnenden Merkmale des Anspruches 1 gelöst.

UV-härtende Druckmedien und Lacke sind für die verschiedensten Zwecke bereits bekannt. Bei diesen bekannten Anwendungen dient die Farb- und/oder Lackschicht dem bleibenden Schutz bzw. der dauerhaften Dekoration eines Objektes. Für die Herstellung keramischer Abziehbilder sind diese bekannten UV-härtbaren Druckmedien und Lacke jedoch nicht geeignet. Bei keramischen Abziehbildern müssen sich nämlich beim späteren Einbrennen der aus keramischen Farben bestehenden Dekoration die getrockneten oder ausgehärteten Druckmedien und Lacke thermisch zersetzen und entweichen, ohne daß dadurch die Form, die oberflächenstruktur, der oberflächenglanz, die Farbnuancen und andere Merkmale der Dekoration beeinträchtigt werden dürfen.

Herkömmliche UV-härtbare Druckmedien und Lacke führen beim Einbrennen der keramischen Dekoration immer zu einer mehr oder weniger starken beschädigung der Dekoration. Der Grund hierfür liegt einerseitz in der Vernetzungsstruktur der durch die UV-Härtung entstandenen Polymere und dem damit verbundenen thermischen Zersetzungsmechanismus, andererseits in der fehlenden Abstimmung zwischen Druckmedien und Lack, durch die erst eine bestimmte Reihenfolge der thermischen Zersetzung und der Entweichung der Zersetzungsprodukte erreicht wird. Die Zersetzungstemperatur und die Zersetzungsprodukte der für andere Zwecke bekannten, UV-härtbaren Druckmedien und Lacke kollidieren durchweg mit dem Einschmelz- und Fließverhalten der keramischen Farben. Dabei sind auch die Stärke der Farb- und Lackschichten sowie die Art der Wärmeübertragung von Bedeutung ; die Zerstörungseffekte der Dekoration nehmen im allgemeinen mit der Stärke der Farb- und Lackschichten und mit der Aufheizungsgeschwindigkeit zu.

Bei den der Erfindung zugrundeliegenden umfangreichen Versuchen konnten demgegenüber UV-härtbare Druckmedien und UV-härtbare Lacke entwickelt werden, die die einwandfreie Herstellung keramischer Abziehbilder gestatten. Diese besonderen Druckmedien und Lacke besitzen einerseits die guten Anpastungs-, Druck- und Aushärtungseigenschaften herkömmlicher UV-härtbarer Systeme, zeigen andererseits jedoch ein ganz anderes thermisches Zersetzungsverhalten, das mit den keramischen Farben und deren Erweichungs-, Viskositäts-, Erstarrungs- und Reaktionsverhalten sowie mit den entsprechenden Eigenschaften der Glasur nicht kollidiert.

Dabei ist weiterhin zu beachten, daß bei einem keramischen Abziehbild die Lackmaske auf den Farbschichten liegen kann und umgekehrt. Die Reihenfolge der thermischen Zersetzung der Komponenten muß deshalb berücksichtigt werden. Von Bedeutung ist auch, daß die Zersetzungswärme sowohl von dem zu dekorierenden Gegenstand als auch von außen durch direkte Strahlung zugeführt werden kann.

Zur Erläuterung des erfindungsgemäßen Verfahrens seien im folgenden die Komponenten (sowie einige Beispiele dieser Komponenten) der Druckmedien und Lacke, ferner die verwendbaren Mengen (jeweils in Gewichtsprozent) genannt.

Die Druckmedien für die Herstellung von Farbpasten aus keramischen Farben besitzen folgende

Zusammensetzung :

| | |
|---|---|
| a₁) Präpolymere acrylierter Polyester | 5-45 % |
| vorzugsweise | 10-25 % |
| | |
| a₂) mono-, di- und trifunktionale Acrylate, wie Diäthylenglykoldiacrylat oder Trimethylolpropantriacrylat | 0-35 % |
| vorzugsweise | 0-10 % |
| | |
| a₃) Polymethacrylate eines Molekulargewichts von 95.000 bis 150.000, wie Degalan LP 62/03 oder LM 62/11 (Degussa) oder Plexigum P 26 (Röhm GmbH) | 15-50 % |
| vorzugsweise | 20-35 % |
| | |
| a₄) Monomere von Methacrylaten mittleren und höheren Molekulargewichts, wie n- und i-Butilmethacrylat oder 2-Äthylhexilmethacrylat | 20-55 % |
| vorzugsweise | 25-50 % |
| | |
| a₅) monomere Weichmacher, wie Dibutilphtalat, Dioctilphtalat oder Dioctiladipat | 0-10 % |
| vorzugsweise | 0- 3 % |
| | |
| a₆) polymere Weichmacher, wie Palamoll 646 (BASF), Unem 9507 (Unilever-Emery, Holland) | 0-10 % |
| vorzugsweise | 0- 2 % |
| | |
| a₇) monomere Lösungen von Alkydharzen, wie Hercolyn D (Hercules Incorp. USA), Alftalat (Höchst AG) | 0-15 % |
| vorzugsweise | 5-10 % |
| | |
| a₈) Photoinitiatorsysteme der Klassen Ketale, Acrylketone oder Benzophenone, wie Benzildimethylketal, Benzophenon, tertiäre Amine oder Benzoinäthyläther | 1-5 % |
| vorzugsweise | 2-4 % |

wobei die Summe der Komponenten $a_2 + a_5 + a_6 + a_7$ mindestens 5 % und die Summe aller verwendeten Komponenten $a_1$ bis $a_8$ 100 % beträgt.
Die Lackschicht besitzt folgende Zusammensetzung :

| | |
|---|---|
| b₁) Präpolymere acrylierter Polyester | 5-40 % |
| vorzugsweise | 10-25 % |
| | |
| b₂) mono-, di- und trifunktionale Acrylate, wie Diäthylenglykoldiacrylat, Trimethylolpropantriacrylat oder Triäthylenglykoldiacrylat | 0-25 % |
| vorzugsweise | 0- 8 % |
| | |
| b₃) Polymethacrylate eines Molekulargewichts von 95.000 bis 150.000, wie Degalan LP 62/03, LM 62/11 (Degussa) oder Plexigum P 26 (Röhm GmbH) | 20-45 % |
| vorzugsweise | 20-40 % |
| | |
| b₄) Monomere von Methacrylaten, wie n- und i-Butilmethacrylate oder 2-Äthylhexilmethacrylat | 20-60 % |
| vorzugsweise | 25-55 % |
| | |
| b₅) monomere Weichmacher, wie Dibutylphtalat, Dioctilphtalat oder Dioctiladipat | 0-10 % |
| vorzugsweise | 0- 2 % |
| | |
| b₆) polymere Weichmacher, wie Palamoll 646 (BASF), Unem 9507 (Unilever-Emery, Holland) | 0-5 % |
| vorzugsweise | 0-1 % |
| | |
| b₇) monomere Lösungen von Alkydharzen, wie Hercolyn D (Hercules Incorp. USA), Alftalat (Höchst AG) | 0-10 % |
| vorzugsweise | 0- 5 % |
| | |
| b₈) Photoinitiatorsysteme der Klassen ketale, Acrylketone oder Benzophenone, wie Benzildimethylketal, Benzophenon, tertiäre Amine oder Benzoinäthyläther | 1-8 % |
| vorzugsweise | 2-6 % |

$b_9$) gesättigte Paraffinlösung in monomerem Methacrylat, wie handelsübliches
Paraffin, gelöst bei 25 °C in n-Butilmethacrylat und filtriert     0,5-3 %
     vorzugsweise     0,5-2 %

$b_{10}$) in Medium lösliche organische Farbstoffe, wie Sudangelb, Sudanblau
oder Sudanrot     0,01-0,05 %
     vorzugsweise     0,01-0,02 %

$b_{11}$) Silikonöl     0,0 -0,1 %
     vorzugsweise     0,01-0,06 %

$b_{12}$) « antiblocking »-Mittel     0,0 -0,1 %
     vorzugsweise     0,01-0,1 %

wobei die Summe der Komponenten $b_2 + b_5 + b_6 + b_7 + b_9 + b_{10} + b_{11} + b_{12}$ mindestens 1 % und die Summe aller verwendeten Komponenten $b_1$ bis $b_{12}$ 100 % beträgt.

Nach Einpastung einer keramischen Farbe in das Druckmedium erfolgt eine Aushärtung des Druckmediums mittels UV-Strahlung. Nach Aufbringen der Lackschicht auf die ausgekärtete Farbschicht wird auch die Lackschicht mittels UV-Strahlung ausgehärtet.

Bei der Wahl der Zusammensetzung der Druckmedien in den genannten Bereichen der einzelnen Komponenten sind vor allem folgende Einflußfaktoren zu berücksichtigen :

— Druckverfahren und Drucktechnik,
— Farblage,
— Anpastverhältnis,
— chemische Zusammensetzung der keramischen Farben und Pigmente,
— Oberflächenmerkmale der keramischen Farben und Pigmente ;
— Härtungsdauer ;
— Einbrennungstemperatur und -dauer ;
— relative Lage der Farb- und Lackschicht beim aufgetragenen Abziehbild.

In entsprechender Weise sind bei Wahl der Zusammensetzung der Komponenten der Lacke in den genannten Bereichen folgende Faktoren zu berücksichtigen :

— Zusammensetzung der verwendeten Druckmedien,
— Farblage,
— Stärke der Lackmaske,
— Härtungsdauer,
— Einbrennungstemperatur und -dauer,
— Reihenfolge der Schichten im Aufbau des Abziehbildes.

Der Härtungs- bzw. Polymerisationsprozeß der Druckmedien und Lacke kann diskontinuierlich oder kontinuierlich erfolgen.

Zweckmäßig liegt der Dampfdruck der Farbpasten und des Lackes bei 20 °C nicht über 0,5 mm Hg. Dies ermöglicht ein relativ geruchsfreies Arbeiten mit langer Topfzeit ohne Verwendung von Lösungsmitteln.

Die Anpast- und Druckeigenschaften der erfindungsgemäßen Druckmedien sind sehr gut. Es sind Anpastverhältnisse (Farbe : Druckmedium) von 10 : 3 bis 10 : 12 möglich. Die Viskosität erlaubt ein Drucken mit jeder herkömmlichen Technik. Die Standzeit der angepasteten Farben im druckreifen Zustand beträgt 2 bis 8 Stunden und mehr. Gleiches gilt für die Lacke.

Bei der UV-Härtung bzw. UV-Polymerisation der erfindungsgemäßen Druckmedien und Lacke entstehen praktisch keine Dämpfe. Die ausgehärtete Farb- bzw. Lackschicht ist wasserunlöslich.

Die UV-Reaktionsfähigkeit der erfindungsgemäßen Druckmedien wird über die jeweils gewählte Zusammensetzung des Druckmediums reguliert. Dabei kann der gegebenenfalls inhibierenden Wirkung von keramischen Farben und sonstigen Füllstoffen und Pigmenten entgegengewirkt werden.

Entsprechend wird die jeweils konkrete Zusammensetzung der Lacke in Abhängigkeit der verwendeten Druckmedien gewählt, so daß eine zweckentsprechende Reihenfolge bei der thermischen Zersetzung der Druckmedien und Lacke gewährleistet wird. Die verschiedenen Komponenten der Druckmedien und Lacke erlauben in den Grenzen der angeführten Bereiche eine solche gegenseitige Abstimmung des thermischen Zersetzungsverhaltens.

Die Leistung der UV-Strahler liegt zweckmäßig zwischen 500 und 15 000 W, so daß die UV-Aushärtung der einzelnen, als Schicht aufgedruckten Farbpasten in 1 bis 15 sec und die UV-Aushärtung der Lackschicht in 5 bis 25 sec erfolgt.

Der Wellenlängenbereich der UV-Strahlung liegt zweckmäßig zwischen 280 und 410 nm, wobei die spezifische Leistung zwischen 50 und 180 W/cm² beträgt.

Im Rahmen des erfindungsgemäßen Verfahrens können alle bekannten Typen von Abziehbild-Trägerpapieren für keramische Farben Verwendung finden. Auch können alle bekannten Druckverfahren, wie Hoch-, Tief-, Offset-, Sieb-, Membran-, Stempeldruck und dergleichen eingesetzt werden.

Die Farbschichten können eine nach der anderen, jede für sich, gedruckt und gehärtet werden, oder es kann auch die Lackschicht zuerst auf das Abziehbild-Trägerpapier gedruckt werden. Das spätere Auftragen des Abziehbildes auf die zu dekorierende Oberfläche kann entweder mit den Farbschichten zum Gegenstand gewandt oder umgekehrt erfolgen.

Das nach dem erfindungsgemäßen Verfahren hergestellte Abziehbild ermöglicht im ausgehärteten Zustand eine Einbrennung auf Glas und glasierten oder unglasierten Gegenständen aus Keramik oder Metall bei 500 bis 1 400 °C, ohne daß hierbei die Form, die Oberflächenstruktur, der Oberflächenglanz, die Farbnuance oder andere Merkmale der keramischen Dekoration beeinträchtigt werden. Das Herstellungsverfahren zeichnet sich durch besondere Einfachheit, kurze Zeitdauer, einen geringen Investitions- und Energiebedarf sowie hohe Umweltfreundlichkeit aus.

Die Erfindung wird weiterhin anhand eines Beispieles erläutert.

Aus den oben bereits genannten Komponenten wird ein Druckmedium folgender Zusammensetzung hergestellt :

$a_1$) = 12, 4 %
$a_2$) = 1, 0 %
$a_3$) = 25, 7 %
$a_4$) = 47, 4 %
$a_5$) = 1, 0 %
$a_6$) = —
$a_7$) = 9, 5 %
$a_8$) = 3, 0 %

Summe  100,00 %

Zunächst werden die Komponenten $a_1$), $a_2$) und $a_4$) gut homogenisiert. Erst nach Erreichung eines homogenen Gemisches wird die Komponente $a_3$) dazugegeben. Das sie sich relativ schwer auflöst, wird dieser Prozeß unter ständigem Rühren 1 bis 4 Stunden fortgesetzt. Eine Erhöhung der Temperatur auf maximal 30 bis 40 °C fördert die Auflösung der Komponente $a_3$) in der Mischung von $a_1$), $a_2$) und $a_4$). Nach vollständiger Auflösung von $a_3$) werden die restlichen Komponenten (außer der Komponente $a_8$) unter ständigem Rühren hinzugefügt. Die so erhaltene Lösung soll vor Verwendung längere Zeit (einige Stunden bis einige Tage) stehen. Vor Benutzung muß die Lösung vollkommen klar sein. Die Komponente $a_8$) wird unmittelbar vor der Anpastung dazugegeben. Das so erhaltene Gemisch soll vor Licht geschützt werden.

In das so hergestellte Druckmedium wird eine keramische Farbe (Einbrenntemperatur 1 040 bis 1 060 °C) eingepastet, und zwar im Verhältnis 10 Teile Farbe : 4 Teile Druckmedium. Die Farbpaste wird dann im Siebdruckverfahren auf ein normales Abziehbild-Trägerpapier aufgedruckt.

Die UV-Härtung erfolgt in ca. 10 Sekunden mit einem UV-Gerät 5 kW (Violux 5002 S).

Der verwendete Lack besitzt folgende Zusammensetzung :

Komponente $b_1$)  = 14,30 %
Komponente $b_2$)  = —
Komponente $b_3$)  = 28,60 %
Komponente $b_4$)  = 50,10 %
Komponente $b_5$)  = 0,50 %
Komponente $b_6$)  = 0,50 %
Komponente $b_7$)  = —
Komponente $b_8$)  = 4,00 %
Komponente $b_9$)  = 0,88 %
Komponente $b_{10}$) = 0,01 %
Komponente $b_{11}$) = 0,01 %
Komponente $b_{12}$) = 0,10 %

Summe  100,00 %

Bei der Herstellung des Lackes wird ähnlich wie bei der Herstellung des Druckmediums verfahren. Zuerst werden $b_1$) und $b_4$) homogenisiert und erst dann werden die schwer lösbaren Komponenten eingebracht. Der mit der Komponente $b_8$) versehene Lack muß vor der Verwendung klar und blasenfrei sein.

Der so hergestellte Lack wird mit Holfe des Siebdruckverfahrens auf die mit UV-Strahlung ausgehärtete Farbschicht auf dem Abziehbild-Trägerpapier aufgebracht. Die Härtungsdauer beträgt ca. 15 Sekunden mit einem UV-Gerät von 5 kW (Violux 5002 S).

Nach der Aushärtung der Lackmaske wird das Abziehbild nach den bekannten Verfahren vom

5

**0 052 764**

Abziehbild-Trägerpapier abgelöst und auf eine glasierte Steingutplatte so aufgetragen, daß eine luftblasenfreie Haftung gewährleistet ist. Nach einer Trocknungszeit von ca. 1 Stunde bei 70 °C wird die dekorierte Steingutplatte gebrannt. Der Brennvorgang erfolgt mit einer Aufheizzeit von 5 Stunden bei 1 050 °C, einer Verweilzeit von 30 Minuten bei 1 050 °C und einer Abkühlungsdauer von ca. 4 Stunden. Nach dem Breennvorgang ergibt sich eine einwandfreie keramische Dekoration.

**Ansprüche**

1. Verfahren zur Herstellung von Abziehbildern, insbesondere zur Dekoration von Glas und glasierten oder unglasierten Gegenständen aus Keramik, Metall oder dergleichen, bei dem auf ein Abziehbild-Trägerpapier eine Dekoration aus keramischen Farbpasten aufgedruckt und diese Dekoration durch eine Lackschicht abgedeckt wird, wobei die Lackschicht Monomere von Metacrylaten enthält und mittels UV-Strahlung ausgehärtet wird, dadurch gekennzeichnet, daß

a) für die Herstellung von Farbpasten aus keramischen Farben bestimmte Druckmedien mit folgender Zusammensetzung Verwendung finden :

| | |
|---|---|
| $a_1$) Präpolymere acrylierter Polyester | 5-45 % |
| $a_2$) mono-, di- und trifunktionale Acrylate | 0-35 % |
| $a_3$) Polymethacrylate eines Molekulargewichts von 95 000 bis 150 000 | 15-50 % |
| $a_4$) Monomere von Methacrylate n mittleren und höheren Molekulargewichtes | 20-55 % |
| $a_5$) monomere Weichmacher | 0-10 % |
| $a_6$) polymere Weichmacher | 0-10 % |
| $a_7$) monomere Lösungen von Alkydharzen | 0-15 % |
| $a_8$) Photoinitiatorsysteme der Klassen Ketale, Acrylketone oder Benzophenone | 1- 5 % |

wobei die Summe der Komponenten $a_2 + a_5 + a_6 + a_7$ mindestens 5 % und die Summe aller verwendeten Komponenten $a_1$ bis $a_8$ 100 % beträgt ;

b) daß ferner die Lackschicht folgende Zusammensetzung aufweist :

| | | | |
|---|---|---|---|
| $b_1$) Präpolymere acrylierter Polyester | 5 | -40 | % |
| $b_2$) mono-, di- und trifunktionale Acrylate | 0 | -25 | % |
| $b_3$) Polymethacrylate eines Molekulargewichts von 95 000 bis 150 000 | 20 | -45 | % |
| $b_4$) Monomere von Methacrylaten mittleren und höheren Molekulargewichts | 20 | -60 | % |
| $b_5$) monomere Weichmacher | 0 | -10 | % |
| $b_6$) polymere Weichmacher | 0 | - 5 | % |
| $b_7$) monomere Lösungen von Alkydharzen | 0 | -10 | % |
| $b_8$) Photoinitiatorsysteme der Klassen Ketale, Acrylketone oder Benzophenone | 1 | - 8 | % |
| $b_9$) gesättigte Paraffinlösung in monomerem Methacrylat | 0,5 | - 3 | % |
| $b_{10}$) im Medium lösliche organische Farbstoffe | | 0,01- 0,05 | % |
| $b_{11}$) Silikonöl | | 0,0 - 0,1 | % |
| $b_{12}$) « antiblocking »-Mittel | | 0,0 - 0,1 | % |

wobei die Summe der Komponenten $b_2 + b_5 + b_6 + b_7 + b_9 + b_{10} + b_{11} + b_{12}$ mindestens 1 % und die Summe aller verwendeten Komponenten $b_1$ bis $b_{12}$ 100 % beträgt ;

c) daß ferner nach Einpastung einer keramischen Farbe in das Druckmedium gemäß a) eine Aushärtung des Druckmediums mittels UV-Strahlung erfolgt und daß nach Aufbringen einer Lackschicht gemäß b) auf die ausgehärtete Farbschicht auch die Lackschicht mittels UV-Strahlung ausgehärtet wird.

2. Verfahren nach Anspruch 1, gekennzeichnet durch folgende Zusammensetzung der Druckmedien :

| | |
|---|---|
| Komponente $a_1$) | 10-25 % |
| Komponente $a_2$) | 0-10 % |
| Komponente $a_3$) | 20-35 % |
| Komponente $a_4$) | 25-50 % |
| Komponente $a_5$) | 0- 3 % |
| Komponente $a_6$) | 0- 2 % |
| Komponente $a_7$) | 5-10 % |
| Komponente $a_8$) | 2- 4 % |

wobei die Summe der Komponenten $a_2 + a_5 + a_6 + a_7$ mindestens 5 % beträgt.

3. Verfahren nach Anspruch 1, gekennzeichnet durch folgende Zusammensetzung der Lacke :

Komponente

| Komponente | | |
|---|---|---|
| $b_1$) | 10 -25 | % |
| $b_2$) | 0 - 8 | % |
| $b_3$) | 20 -40 | % |
| $b_4$) | 25 -55 | % |
| $b_5$) | 0 - 2 | % |
| $b_6$) | 0 - 1 | % |
| $b_7$) | 0 - 5 | % |
| $b_8$) | 2 - 6 | % |
| $b_9$) | 0,5 - 2 | % |
| $b_{10}$) | 0,01- 0,02 | % |
| $b_{11}$) | 0,01- 0,06 | % |
| $b_{12}$) | 0,01- 0,1 | % |

4. Verfahren nach Anspruch 1, dadurch gekennzeichnet, daß die Leistung der UV-Strahler zwischen 500 und 15 000 W liegt, so daß die UV-Aushärtung der einzelnen, als Schicht aufgedruckten Farbpasten in 1 bis 15 sec und die UV-Aushärtung der Lackschicht in 5 bis 25 sec erfolgt.

5. Verfahren nach Anspruch 1, dadurch gekennzeichnet, daß der Wellenlängenbereich der UV-Strahlung zwischen 280 und 410 nm liegt und die spezifische Leistung zwischen 50 und 180 W/cm$^2$ beträgt.

6. Verfahren nach Anspruch 1, dadurch gekennzeichnet, daß der Dampfdruck der Farbpasten bei 20 °C nicht über 0,5 mm Hg beträgt.

7. Verfahren nach Anspruch 1, dadurch gekennzeichnet, daß der Dampfdruck des Lackes bei 20 °C nicht über 0,5 mm Hg beträgt.

8. Druckmedium für die Herstellung von Farbpasten aus keramischen Farben zur Herstellung von Abziehbildern nach dem Verfahren gemäß Anspruch 1, gekennzeichnet durch eine Zusammensetzung gemäß Anspruch 2.

9. Lack für die Herstellung von Abziehbildern nach dem Verfahren gemäß Anspruch 1, gekennzeichnet durch eine Zusammensetzung gemäß Anspruch 1 lit b, vorzugsweise gemäß Anspruch 3.

**Claims**

1. A process for the production of transfers, especially for the decoration of glass and glazed or unglazed objects of ceramic, metal or the like, in which a decoration of a ceramic pigment paste is applied by printing to a transfer backing paper and subsequently covered by a layer of lacquer, said layer of lacquer comprising monomeres of methycrylate and being hardened by UV-light, characterised in that

a) printing media for preparing pigment pastes from ceramic pigments are used having the following composition :

| | | |
|---|---|---|
| $a_1$) prepolymers of acrylic polyesters | 5 to 45 % | |
| $a_2$) mono-, di- and tri-functional acrylates | 0 to 35 % | |
| $a_3$) polymethacrylates with a molecular weight between 95 000 and 150 000 | 15 to 50 % | |
| $a_4$) monomeres of methacrylates of average and higher molecular weight | 20 to 55 % | |
| $a_5$) monomeric plasticisers | 0 to 10 % | |
| $a_6$) polymeric plasticisers | 0 to 10 % | |
| $a_7$) monomeric solutions of alkyd resins | 0 to 15 % | |
| $a_8$) photoinitiator systems of the class consisting of ketals, acrylketones or benzophenones | 1 to 5 % | |

the sum of components $a_2 + a_5 + a_6 + a_7$ amounting to at least 5 % and the sum of all components $a_1$ to $a_8$ mounting to 100 % ;

b) the layer of lacquer has the following composition

| | | |
|---|---|---|
| $b_1$) prepolymeres of acrylic polyesters | 5 to 40 % | |
| $b_2$) mono-, di- and trifunctional acrylates | 0 to 25 % | |
| $b_3$) polymethacrylates with a molecular weight between 95 000 and 150 000 | 20 to 45 % | |
| $b_4$) monomeres of methacrylates of average and higher molecular weight | 20 to 60 % | |
| $b_5$) monomeric plasticisers | 0 to 10 % | |
| $b_6$) polymeric plasticisers | 0 to 5 % | |
| $b_7$) monomeric solutions of alkyd resins | 0 to 10 % | |
| $b_8$) photoinitiator systems of the classes consisting of ketals, acryl ketones or benzophenones | 1 to 8 % | |

7

# 0 052 764

| | |
|---|---|
| $b_9$) saturated paraffin solution in monomeric methacrylate | 0,5 to 3 % |
| $b_{10}$) organic dyes soluble in the medium | 0,01 to 0,05 % |
| $b_{11}$) silicone oil | 0,0 to 0,1 % |
| $b_{12}$) antiblocking agent | 0,0 to 0,1 % |

the sum of components $b_2 + b_5 + b_6 + b_7 + b_9 + b_{10} + b_{11} + b_{12}$ amounting to at least 1 % and the sum of all used components $b_1$ to $b_{12}$ amounting to 100 % ;

c) following to mixing a ceramic pigment with the printing medium according a) said printing medium is hardened by means of UV-radiation and in that following to applying a layer of lacquer according b) onto the hardened pigment layer said layer of lacquer also is hardened by means of UV-radiation.

2. A process as claimed in claim 1, characterised by the following composition of the printing media :

| | |
|---|---|
| component $a_1$) | 10 to 25 % |
| component $a_2$) | 0 to 10 % |
| component $a_3$) | 20 to 35 % |
| component $a_4$) | 25 to 50 % |
| component $a_5$) | 0 to 3 % |
| component $a_6$) | 0 to 2 % |
| component $a_7$) | 5 to 10 % |
| component $a_8$) | 2 to 4 % |

the sum of components $a_2 + a_5 + a_6 + a_7$ amounting to at least 5 %.

3. A process as claimed in claim 1, characterised by the following composition of the lacquer :

| | |
|---|---|
| component $b_1$) | 10 to 25 % |
| component $b_2$) | 0 to 8 % |
| component $b_3$) | 20 to 40 % |
| component $b_4$) | 25 to 55 % |
| component $b_5$) | 0 to 2 % |
| component $b_6$) | 0 to 1 % |
| component $b_7$) | 0 to 5 % |
| component $b_8$) | 2 to 6 % |
| component $b_9$) | 0,5 to 2 % |
| component $b_{10}$) | 0,01 to 0,02 % |
| component $b_{11}$) | 0,01 to 0,06 % |
| component $b_{12}$) | 0,01 to 0,1 % |

4. A process as claimed in claim 1, characterised in that the output of the UV-radiators is between 500 and 15 000 W so that the UV-hardening of the several pigment pastes printed as layer is obtained within 1 to 15 sec and the UV-hardening of the layer of lacquer is obtained within 5 to 25 sec.

5. A process as claimed in claim 1, characterised in that the wavelenght range of the UV-radiation is from 280 to 410 nm and the specific output is between 50 and 180 W/cm$^2$.

6. A process as claimed in claim 1, characterised in that the vapour pressure of the pigment pastes at 20 °C is not more than 0,5 mm Hg.

7. A process as claimed in claim 1, characterised in that the vapour pressure of the lacquer at 20 °C is not more than 0,5 mm Hg.

8. A printing medium for preparing pigment pastes from cermic pigments for the production of transfers according the process as claimed in claim 1, characterised by a composition according claim 2.

9. Lacquer for the production of transfers according to the process as claimed in claim 1, characterised by a composition according claim 1), preferably according claim 3.

**Revendications**

1. Procédé de réalisation d'images à décalquer, en particulier pour la décoration du verre et d'objets vitrifiés ou non vitrifiés de céramique, de métal ou analogues, procédé suivant lequel une décoration de pâtes de couleurs céramiques est imprimée sur un papier formant substrat de l'image à décalquer, puis cette décoration est recouverte d'une couche de laque, cette dernière contenant des monomères de méthacrylates et étant durcie aux ultraviolets, procédé caractérisé en ce que :

a) des milieux d'impression déterminés sont utilisés pour la réalisation de pâtes de couleurs céramiques et ont la composition suivante :

| | |
|---|---|
| $a_1$) prépolymères de polyester acrylique | 5-45 % |
| $a_2$) acrylates monofonctionnels, difonctionnels et trifonctionnels | 0-35 % |

8

| | |
|---|---|
| $a_3$) polyméthacrylates d'un poids moléculaire de 95 000 à 150 000 | 15-50 % |
| $a_4$) monomères de méthacrylates de poids moléculaire moyen et élevé | 20-55 % |
| $a_5$) plastifiants monomères | 0-10 % |
| $a_6$) plastifiants polymères | 0-10 % |
| $a_7$) solutions monomères de résines alkydes | 0-15 % |
| $a_8$) inducteurs photochimiques des classes cétales, acrylcétones ou benzophénones | 1- 5 % |

la somme des constituants $a_2 + a_5 + a_6 + a_7$ représentant au moins 5 % et la somme de tous les constituants utilisés $a_1$ à $a_8$ représentant 100 % ;

     b) par ailleurs, la couche de laque a la composition suivante :

| | | | |
|---|---|---|---|
| $b_1$) prépolymères de polyester acrylique | 5 | -40, | % |
| $b_2$) acrylates monofonctionnels, bifonctionnels et trifonctionnels | 0 | -25 | % |
| $b_3$) polyméthacrylates d'un poids moléculaire de 95 000 à 150 000 | 20 | -45 | % |
| $b_4$) monomères de méthacrylates de poids moléculaire moyen et élevé | 20 | -60 | % |
| $b_5$) plastifiants monomères | 0 | -10 | % |
| $b_6$) plastifiants polymères | 0 | - 5 | % |
| $b_7$) solutions monomères de résines alkydes | 0 | -10 | % |
| $b_8$) inducteurs photochimiques des classes cétales, acrylcétones ou benzophénones | 1 | - 8 | % |
| $b_9$) solution saturée de paraffine dans du méthacrylate monomère | 0,5 | - 3 | % |
| $b_{10}$) colorants organiques solubles dans le milieu | 0,01- | 0,05 | % |
| $b_{11}$) huile de silicone | 0,0 - | 0,1 | % |
| $b_{12}$) agent anti-adhésif | 0,0 - | 0,1 | % |

la somme des constituants $b_2 + b_5 + b_6 + b_7 + b_9 + b_{10} + b_{11} + b_{12}$ représentant au moins 1 % et la somme de tous les constituants utilisés $b_1$ à $b_{12}$ représentant 100 % ;

     c) après formation d'une pâte d'une couleur céramique avec le milieu d'impression suivant a), celui-ci subit un durcissement aux ultraviolets et après dépôt d'une couche de laque suivant b) sur la couche de couleur durcie, cette couche de laque subit aussi un durcissement aux ultraviolets.

    2. Procédé selon la revendication 1, caractérisé par la composition suivante des milieux d'impression :

| | |
|---|---|
| constituants $a_1$) | 10-25 % |
| constituants $a_2$) | 0-10 % |
| constituants $a_3$) | 20-35 % |
| constituants $a_4$) | 25-50 % |
| constituants $a_5$) | 0- 3 % |
| constituants $a_6$) | 0- 2 % |
| constituants $a_7$) | 5-10 % |
| constituants $a_8$) | 2- 4 % |

la somme des constituants $a_2 + a_5 + a_6 + a_7$ représentant au moins 5 %.

    3. Procédé selon la revendication 1, caractérisé par la composition suivante de la laque :

constituants

| | | | |
|---|---|---|---|
| $b_1$) | 10 | -25 | % |
| $b_2$) | 0 | - 8 | % |
| $b_3$) | 20 | -40 | % |
| $b_4$) | 25 | -55 | % |
| $b_5$) | 0 | - 2 | % |
| $b_6$) | 0 | - 1 | % |
| $b_7$) | 0 | - 5 | % |
| $b_8$) | 2 | - 6 | % |
| $b_9$) | 0,5 | - 2 | % |
| $b_{10}$) | 0,01- | 0,02 | % |
| $b_{11}$) | 0,01- | 0,06 | % |
| $b_{12}$) | 0,01- | 0,1 | % |

    4. Procédé selon la revendication 1, caractérisé en ce que la puissance du projecteur d'ultraviolets est comprise entre 500 et 15 000 W, de manière que le durcissement aux ultraviolets des couches individuelles de couleurs déposées par impression sous forme de couches s'effectue en 1 à 15 s et que le durcissement aux ultraviolets de la couche de laque dure 5 à 25 s.

    5. Procédé selon la revendication 1, caractérisé en ce que la plage des longueurs d'onde du rayonnement ultraviolet est comprise entre 280 et 410 nm et la puissance spécifique est comprise entre 50 et 180 W/cm².

6. Procédé selon la revendication 1, caractérisé en ce que la tension de vapeur des pâtes de couleurs ne dépasse pas 0,5 mm Hg à 20 °C.

7. Procédé selon la revendication 1, caractérisé en ce que la tension de vapeur de la laque ne dépasse pas 0,5 mm Hg à 20 °C.

8. Milieu d'impression pour la réalisation de pâtes de couleurs céramiques pour la production d'images à décalquer suivant le procédé selon la revendication 1, caractérisé par une composition selon la revendication 2.

9. Laque pour la réalisation d'images à décalquer selon le procédé suivant la revendication 1, caractérisée par une composition suivant la revendication 1, paragraphe b, de préférence suivant la revendication 3.